# NEUE EUROPÄISCHE PATENTSCHRIFT

(11) **EP 2 689 071 B2**
(45) Veröffentlichungstag und Bekanntmachung des Hinweises auf die Entscheidung über den Einspruch: **25.03.2020**
(45) Hinweis auf die Patenterteilung: 14.09.2016
(21) Anmeldenummer: 12714568.8
(22) Anmeldetag: 23.03.2012
(51) Int. Cl.: E02D 5/80, E02D 7/22, F16B 35/00

(54) **GRUNDANKERSYSTEM**
SYSTEM FOR ANCHORING A SOIL
SYSTÈME D'ANCRAGE D'UN SOL

(30) Priorität: 23.03.2011 DE 102011014880
(43) Veröffentlichungstag der Anmeldung: 29.01.2014
(73) Patentinhaber: Spinnanker GmbH, 2345 Brunn am Gebirge (AT)
(72) Erfinder: MAYRHOFER, Martin, 4040 Linz (AT)
(74) Vertreter: Riebling, Peter
(86) Internationale Anmeldenummer: PCT/EP2012/001272
(87) Internationale Veröffentlichungsnummer: WO 2012/126629

(56) Entgegenhaltungen:
- WO-A1-96/30161
- AT-A1- 500 957
- AT-U2- 8 142
- DE-B- 1 177 095
- DE-U1-202009 000 701
- FR-A1- 2 807 461
- US-A- 3 231 032
- US-A- 4 679 967
- US-A- 4 960 348
- US-A- 5 066 168

## Beschreibung

Die Erfindung betrifft einen Alpinankersystem zur Verankerung von Gewindestäben im Erdboden oder Gestein nach dem Oberbegriff des Patentanspruches 1, sowie eine Montagemaschine nach dem Anspruch 7, sowie ein Verfahren zur Montage eines Alpinankers nach Anspruch 8.

Mit dem Gegenstand der auf den gleichen Anmelder zurückgehenden EP 1 750 020 B1 oder auch der AT 008 142 U2 ist ein solcher Alpinanker bekannt geworden, der in der genannten Druckschrift als Spinnanker bezeichnet ist.

Er besteht im Wesentlichen aus einer Grundplatte, die auf den Erdboden oder dem Gestein aufgesetzt wird und aus durch die Grundplatte hindurch zu treibenden Gewindestäben, die in unterschiedlichen Richtungen und Winkeln durch zugeordnete Gewindebohrungen in der Grundplatte hindurchgeschraubt werden, um so ebenfalls in unterschiedlichen Winkeln und Richtungen im Erdreich oder im Gestein verankert zu werden. Eine ähnliche Montagemaschine ist aus der DE 11 77 095 B bekannt.

Ein derartiger Alpinanker hat sich in großem Umfang bewährt. Es hat sich jedoch herausgestellt, dass die Montage der Gewindestäbe in der Grundplatte schwierig ist, denn bisher war es lediglich bekannt, zur Montage eine bestimmte Art einer Bohrmaschine zu verwenden. Eine solche, bekannte Bohrmaschine besteht aus einem Antriebsmotor, der ein als Klemmfutter ausgebildetes Bohrfutter drehend antreibt.

Zur Verankerung mit einer derartigen Bohrmaschine war es bekannt, den Gewindestab mit seinem hinteren Ende in dem Bohrfutter oder Klemmfutter einzuspannen und dann den Gewindestab mit seinem vorderen Ende auf die Gewindebohrung in der Grundplatte aufzusetzen und danach die Bohrmaschine einzuschalten. Durch den drehenden Antrieb des Gewindestabes wurde dieser somit fortschreitend in das Erdreich oder das Gestein eingetrieben, weil die an seinem Umfang angeordneten Gewindesteigungen den Gewindestab in das Erdreich hineinzogen.

Nachteil dieser bekannten Montage ist jedoch, dass man die Bohrmaschine bzw. die Montagemaschine freistehend in der Hand halten muss, um einen relativ langen Gewindestab mit Längen bis zu 6 m einzudrehen. Standardmaß der verwendeten Gewindestäbe ist eine Länge von 2-4 m, wobei ein Gewindestab freistehend bei freigehaltener Montagemaschine durch die Gewindebohrungen der Grundplatte eingetrieben werden muss. Damit war eine große Verletzungsgefahr verbunden, denn es konnte vorkommen, dass die Gewindestäbe nicht ordnungsgemäß im Klemmfutter eingeklemmt waren und dann beim Antrieb der Montagemaschine weggeschleudert wurden, oder es konnte auch vorkommen, dass während des Eintreibens der Gewindestäbe durch die Gewindebohrungen in der Grundplatte der Gewindestab im Erdreich oder Gestein auf einen Widerstand stieß, abriss oder verkantete, wodurch es schwierig war, die Montagemaschine unfallfrei zu halten.

Der Erfindung liegt deshalb die Aufgabe zugrunde, einen Alpinanker der eingangs genannten Art so weiterzubilden, dass eine wesentlich betriebssichere Montage von Gewindestäben durch die Grundplatte des Alpinankers möglich ist.

Ferner liegt der Erfindung die weitere Aufgabe zugrunde, eine hierfür geeignete Montagemaschine vorzuschlagen, sowie ein Verfahren zur Montage eines solchen Alpinankers vorzusehen.

Zur Lösung der gestellten Aufgabe ist die Erfindung durch die technische Lehre der unabhängigen Ansprüche gekennzeichnet.

Mit der neuen Lösung können Gewindestäbe mit einer Länge von bis zu 12 m ohne Kraftaufwand des Benutzers und bei Vermeidung einer Unfallgefahr eingetrieben werden.

Die Erfindung beansprucht deshalb in allgemeiner Form jedwede Art einer (lösbaren) Steckkupplung zwischen einem stationären, maschinenfesten Formstück einer Montagemaschine und der Grundplatte des Alpinankers.

Wesentliches Merkmal der Erfindung ist demnach, dass der Alpinanker eine Grundplatte aufweist, in der eine Anzahl von Gewindebohrungen angeordnet sind, in denen die Gewindestäbe einschraubbar sind und dass auf oder in der Grundplatte in der Nähe der Gewindebohrungen Formaufnahmen für den drehfesten Eingriff des feststehenden Teils der Montagemaschine angeordnet sind, in denen die Montagemaschine beim Eindrehen der Gewindestäbe drehfest verankerbar ist. Dies ist eine erste Ausführung der beanspruchten Steckkupplung.

Diese Formaufnahmen haben die Aufgabe, bestimmte, gehäusefeste Teile der Montagemaschine drehfest aufzunehmen, wobei diese gehäusefesten Teile der Montagemaschine nachfolgend als Formstücke bezeichnet werden. Diese Formstücke sind z. B. als Vierkantrohr ausgebildet und sind gehäusefest mit dem nicht drehend angetriebenen Teil der Montagemaschine verbunden.

Erfindungsgemäß ist nun vorgesehen, dass die Montagemaschine mit dem am vorderen Ende angeordneten Formstück zunächst in formschlüssiger Kupplung mit der auf oder in der Grundplatte angeordneten Formaufnahme gekuppelt wird, um so zu erreichen, dass die Montagemaschine vor dem Einschalten des Drehantriebes mit ihrer Vorderseite drehfest mit der Oberseite der Grundplatte gekuppelt ist.

Von besonderem Vorteil ist, wenn die Länge und Neigung des Formstücks an der Montagemaschine bezüglich des formschlüssigen Eingriffs in die grundplattenseitige Formaufnahme so gewählt ist, dass die Montagemaschine bei der drehfesten Kupplung auf der, Grundplatte, also bei Einstecken des maschinenseitigen Formstücks in die grundplattenseitige Formaufnahme, frei steht und nicht von Hand vor dem Herausfallen oder Abkippen gesichert werden muss.

Damit ergibt sich eine besonders betriebssichere Handhabung, denn vor und während des Eindrehvorgangs der Gewindestäbe in die Grundplatte muss die Montagemaschine nicht mit der Körperkraft des menschlichen Körpers gegen Herausfallen oder Verdrehen abgestützt werden.

Das Eindrehen der Gewindestäbe erfolgt sozusagen selbsttätig, denn der Vorschub der Gewindestäbe wird durch Eingreifen des Gewindes der Gewindestäbe in den grundplattenseitigen Gewindebohrungen bewirkt. Die Montagemaschine dient also nur dem Drehantrieb der Gewindestäbe und muss keine Vorschubkraft erzeugen. Deshalb bedarf es auch keiner handgestützten, in axialer Richtung der Gewindestäbe aufzubringenden Handkraft auf die Montagemaschine, weil keine von Hand aufzubringende Vorschubkraft notwendig ist.

Die erfindungsgemäß an der Grundplatte angeordneten Formaufnahmen dienen demnach zur drehfesten Kupplung mit einem zugeordneten maschinenseitigen Gegenstück (Formstück), welches an der Montagemaschine angeordnet ist.

Mit dieser technischen Lehre ergibt sich der wesentliche Vorteil, dass die Grundplatte nunmehr aufgrund ihrer die Gewindebohrungen mindestens teilweise umgebenden Formaufnahmen geeignet ist, drehfest mit der zugeordneten Montagemaschine gekuppelt zu werden.

Zum Eintreiben der Gewindestäbe ist es deshalb vorgesehen, dass zunächst die Montagemaschine drehfest mit der Oberseite der Grundplatte im Bereich jeweils einer Gewindebohrung gekuppelt wird und dass danach der Gewindestab mit dem Drehantrieb der Montagemaschine durch die Gewindehülse in der Grundplatte in das Erdreich oder Gestein eingetrieben wird. Als Gewindehülse wird hierbei der mit einem Gewinde versehene Fortsatz der Grundplatte verstanden.

Es ist allerdings nicht lösungsnotwendig, dass die grundplattenseitige Gewindebohrung in einem an der Grundplatte angeformten Fortsatz angeordnet ist. Die Anordnung des Fortsatzes ist nur deshalb vorteilhaft, weil dadurch die Länge des Einschraubgewindes in der Grundplatte lang ausgebildet ist.

In einer anderen Ausgestaltung kann der Fortsatz auch entfallen und die Gewindebohrung ist - ohne einen die Einschraublänge verlängernden Fortsatz - unmittelbar in der Grundplatte angeordnet.

Damit besteht der Vorteil, dass die Montagemaschine nicht mehr freihändig von dem Benutzer gehalten werden muss, sondern die Montagemaschine wird vor Beginn der Montage mit der Oberseite der Grundplatte des Alpinankers drehfest gekuppelt, und danach wird am oberen Ende des Montagekopfes (in Richtung zur Sichtseite des Benutzers) ein Gewindestab in eine im Montagekopf angeordnete Einführöffnung eingesetzt und dort soweit von Hand nach vorne geschoben, bis er in eine im Montagekopf drehend angetriebene Antriebshülse eingeschoben wird.

Diese Antriebshülse stellt den Kraftschluss mit der flachen Seite des Gewindestabes her und treibt den Gewindestab drehend an.

Sobald nun der Drehantrieb der Montagemaschine eingeschaltet wird, dreht sich die Antriebshülse und arbeitet sich an dem Gewinde des Gewindestabes entlang, so dass dieser in Vorschubrichtung durch die Gewindebohrung in der Grundplatte nach unten getrieben wird, um so besonders betriebs- und unfallsicher in das Erdreich oder Gestein eingetrieben zu werden.

Es ist demzufolge nicht mehr notwendig, in das Klemmfutter einer vorzugsweise als Bohrmaschine ausgebildeten Montagemaschine das hintere Ende eines Gewindestabes einzuspannen und diesen Gewindestab freihändig durch die Gewindebohrung der Grundplatte hindurchzuschrauben. Diese Art der Montage wurde im Stand der Technik durchgeführt und bedeutete eine besonders unfallträchtige Montage, insbesondere, wenn ein Alpinanker im freien, steilen Gelände montiert werden soll, in dem es für die Bedienungsperson nur eine unzureichende Standfläche gibt.

Die Erfindung bezieht sich also auf jede lösbare Kupplung zwischen einer Montagemaschine und der zugeordneten Gewindebohrung im Bereich der Grundplatte des Alpinankers. Diese Kupplung wird auch als Steckkupplung bezeichnet.

In der bevorzugten Ausgestaltung ist die formschlüssige Kupplung als in oder an der Oberseite der Grundplatte die jeweilige grundplattenseitige Gewindebohrung mindestens teilweise umgebende Formaufnahme ausgebildet.

Diese Formaufnahme kann wahlweise zwei oder drei (Dreieck) oder mehr als drei (z.B. Vier- oder Fünfeck) jeweils im Winkel aneinander anschliessende Wände oder Anschlagflächen aufweisen, die zur formschlüssigen Anlage der Gegenflächen des maschinenseitigen Formstücks geeignet sind. Die formschlüssige Anlage des maschinenseitigen Formstücks kann hierbei innerhalb der Wände oder Anschlagflächen der Formaufnahme erfolgen oder auch außerhalb. Ferner ist auch eine Kombination von innerer Anlage und äußerer Anlage möglich.

Die erst genannte Ausführung bedeutet, dass sich das maschinenseitige Formstück von innen her an die grundplattenseitigen Wände oder Anschlagflächen der Formaufnahme anlegt.

Die letzt genannte Ausführung bedeutet, dass das maschinenseitige Formstück die grundplattenseitigen Wände oder Anschlagflächen der Formaufnahme von außen übergreift, um den angestrebten drehfesten Formschluss zu erreichen.

In einer besonders einfachen Ausführungsform kann die grundplattenseitige Formaufnahme als etwa vierkantiger umlaufender Rahmen um die in der Grundplatte eingeformte Gewindebohrung ausgebildet sein, der in der Art eines Kragens über die Gewindebohrung hinaus steht und mit ihrer Längsachse eine axiale Verlängerung der Gewindebohrung in der Formausnehmung bildet.

In die grundplattenseitige Formausnehmung wird das maschinenseitig angeordnete Formstück eingesteckt, um so eine lösbare Kupplung zwischen dem Gehäuse der Montagemaschine und der Grundplatte des Alpinankers zu schaffen.

In einer anderen Ausgestaltung der Erfindung kann es vorgesehen sein, dass die mindestens teilweise die Gewindebohrungen umgebenden Formaufnahmen nicht als erhöhter umlaufender Rahmen oberhalb der Oberfläche der Grundplatte angeordnet sind, sondern stattdessen als Vertiefungen in der Grundplatte ausgebildet sind.

Es kommt also lediglich auf eine formschlüssige Verbindung zwischen einem gehäusefesten Teil an der Montagemaschine und der zugeordneten Oberseite der Grundplatte an.

Statt einer Vierkantausnehmung und einer zugeordneten vierkantig ausgebildeten Formaufnahme in der Grundplatte können selbstverständlich auch jede beliebigen anderen Kupplungsteile verwendet werden. So können z. B. sechseckige, ovale, dreieckige oder andere Formaufnahmen an oder in der Grundplatte angeordnet werden, die mit gleich profilierten Formstücken an der Montagemaschine formschlüssig zusammenwirken und die erwünschte Drehkupplung erbringen.

Eine solche Formaufnahme kann auch durch Steckbolzen gebildet sein, die in zugeordnete Steckaufnahmen im gegenüberliegenden Teil eingreifen.
In einer bevorzugten Ausführung sind die Steckbolzen an der Montagemaschine angeordnet und greifen in zugeordnete als Bohrungen ausgebildete Steckaufnahmen in oder an der Grundplatte ein.

Alle beschriebenen formschlüssigen Verbindungen können also hohe Drehmomente übertragen, und es ist deshalb nicht mehr notwendig - wie beim Stand der Technik bekannt -, dass man die Montagemaschine mit den bloßen Händen halten muss, um das auf die Montagemaschine von Seiten des einzudrehenden Gewindestabes übertragene, relativ hohe Drehmoment mit Körperkraft abfangen muss.

Anstatt einer vorher beschriebenen formschlüssigen Steckkupplung zwischen der Grundplatte und der gehäuseseitigen Montagemaschine können jedoch auch andere Steckkupplungen verwendet werden, wie z. B. Bajonettkupplungen, Schraubkupplungen oder Schraubkupplungen.

In einer Ausgestaltung des Erfindungsgedankens nach dem Gegenstand eines unabhängigen Anspruches ist ferner vorgesehen, dass die Montagemaschine nicht mehr die Ausbildung einer einfachen Bohrmaschine aufweist, sondern stattdessen einen über ein Untersetzungsgetriebe angetriebenen Montagekopf aufweist, in dessen Innenraum ein drehend angetriebenes Drehfutter angeordnet ist, welches formschlüssig mit dem Gewindestab verbindbar ist.

Der Gewindestab ist hierbei über eine am Montagekopf angeordnete Einführöffnung in eine im Montagekopf drehend angetriebene Antriebshülse einführbar, die drehend angetrieben ist und den Gewindestab drehend in Längsrichtung antreibt.

Hierzu ist es bekannt, die Gewindestäbe an einander gegenüberliegenden Seiten mit Abflachungen zu versehen, so dass die Gewindesteigungen nur jeweils außerhalb dieser Abflachungen am Außenumfang des Gewindestabes angeordnet sind.

Auf diese Weise ist es möglich, den Gewindestab in die drehend angetriebene, dem oben beschriebenen Profil des Gewindestabes angepasst profilierte Antriebshülse einzuführen und dort den Kraftschluss mit den flachen Seiten des Gewindestabes herzustellen, wonach dann die Antriebshülse drehend angetrieben wird und der Gewindestab von oben nach unten durch die im Montagekopf angeordnete Einführöffnung durch die Gewindebohrung in der Grundplatte hindurchgeschraubt wird und mit seiner vorderen Spitze in das Erdreich oder Gestein eingetrieben wird. Der Vorschub des Gewindestabes erfolgt jedoch durch Eingreifen des Gewindestabes in die grundplattenseitige Gewindebohrung. Es ist nicht notwendig, auf die Montagemaschine eine Handkraft zur Erzeugung eines Vorschubes des Gewindestabes zu erzeugen.

In erster Linie soll es sich um eine Drehmomenten übertragende Kupplung handeln, die formschlüssig ist.

In einer anderen Ausgestaltung kann es vorgesehen sein, dass diese Kupplung noch zusätzlich die Montagemaschine auf der Grundplatte gegen Abheben in Längsrichtung des Gewindestabes sichert. Zu diesem Zweck können die hier beschriebenen Steckkupplungen mit einer zusätzlichen Arretierung gegen Ausheben der Montagemaschine aus der grundplattenseitigen Formaufnahme ausgerüstet sein. Eine solche Aushebesicherung kann als federbelastete Kugelarretierung oder als Klemmkupplung ausgebildet sein. Neben der Eigenschaften einer Steckkupplung wird demnach auch die Erweiterung der Steckkupplung mit einer rast- oder klemmbaren Aushebesicherung beansprucht.

Ein Verfahren zur Montage eines Alpinankers mit einer Montagemaschine nach einem unabhängigen Anspruch sieht vor, dass der Gewindestab mit der drehfest mit der Grundplatte gekuppelten Montagemaschine durch die Gewindehülse in der Grundplatte in das Erdreich oder Gestein eingetrieben wird.

Dies bedeutet, dass bei der Montage der Gewindestäbe die Montagemaschine drehfest mit der Grundplatte gekuppelt ist und erst dann eingeschaltet wird und in diesem aufgesetzten Zustand die Gewindestäbe durch den Drehantrieb der Montagemaschine durch die Gewindebohrungen in der Grundplatte in das Erdreich oder das Gestein eingetrieben werden.

In einem ersten Verfahrensschritt wird deshalb der zu montierende Gewindestab in einer Einführöffnung an der Rückseite des Montagekopfes eingesetzt und bis in den Bereich der im Montagekopf angeordneten Antriebshülse geführt.

In einem zweiten Verfahrensschritt gelangt dann der Gewindestab in formschlüssigen Eingriff mit der Antriebshülse und in einem dritten Verfahrensschritt wird das an der Vorderseite der Montagemaschine angeordnete Formstück in formschlüssigem Eingriff mit der Formaufnahme auf der Grundplatte gebracht, wobei hierbei die Montagemaschine auf die Oberseite der Grundplatte aufgesetzt wird. In einem vierten Verfahrensschritt wird der Antriebsmotor der Antriebsmaschine in Gang gesetzt, und der Gewindestab wird mit der drehfest mit der Grundplatte gekuppelten Montagemaschine durch die Gewindehülse in der Grundplatte hindurch in das Erdreich oder Gestein eingetrieben.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Alpinankers mit einer darauf aufgesetzten Montagemaschine zur Montage der Gewindestäbe
- Figur 2:: eine ähnliche Darstellung wie Figur 1 in einer anderen Ansicht
- Figur 3:: eine vergrößerte Darstellung der Montagestellung nach Figur 1 und 2
- Figur 4:: die perspektivische Ansicht einer ersten Ausführungsform einer Grundplatte eines Alpinankers
- Figur 5:: die Unteransicht der Grundplatte des Alpinankers nach Figur 4
- Figur 6:: eine zweite Ausführungsform einer Grundplatte eines Alpinankers
- Figur 7:: die perspektivische Unteransicht des Alpinankers nach Figur 6
- Figur 8:: Perspektivische Darstellung einer weiteren Ausführung einer Formaufnahme
- Figur 9:: Der Schnitt durch die Anordnung nach Figur 8
- Figur 10:: Eine perspektivische Darstellung einer gegenüber Figur 8 abgewandelten Ausführungsform
- Figur 11:: Der Schnitt durch die Anordnung nach Figur 10
- Figur 12:: Die perspektivische Darstellung einer weiteren Ausführungsform
- Figur 13:: Die gleiche Darstellung wie Figur 12
- Figur 14:: Der Schnitt durch die Anordnung nach Figur 12 und 13
- Figur 15:: Die perspektivische Darstellung einer gegenüber Figur 12 abgewandelten Ausführungsform
- Figur 16:: Die perspektivische Darstellung nach Figur 15
- Figur 17:: Schnitt durch die Anordnung nach Figur 15 und 16
- Figur 18:: Eine perspektivische Darstellung einer weiteren Ausführungsform für eine Steckkupplung
- Figur 19:: Schnitt durch die Anordnung der Figur 18
- Figur 20:: Eine gegenüber Figur 20 abgewandelte Ausführungsform
- Figur 21:: Schnitt durch die Ausführungsform der Figur 20
- Figur 22:: Perspektivische Darstellung einer weiteren Ausführungsform einer Steckkupplung
- Figur 23:: Schnitt durch die Ausführung der Figur 22

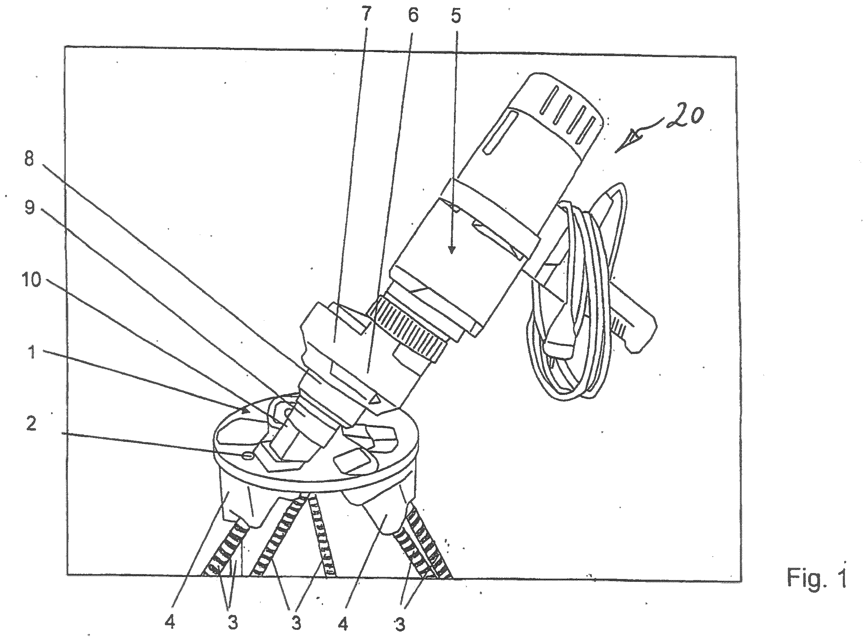

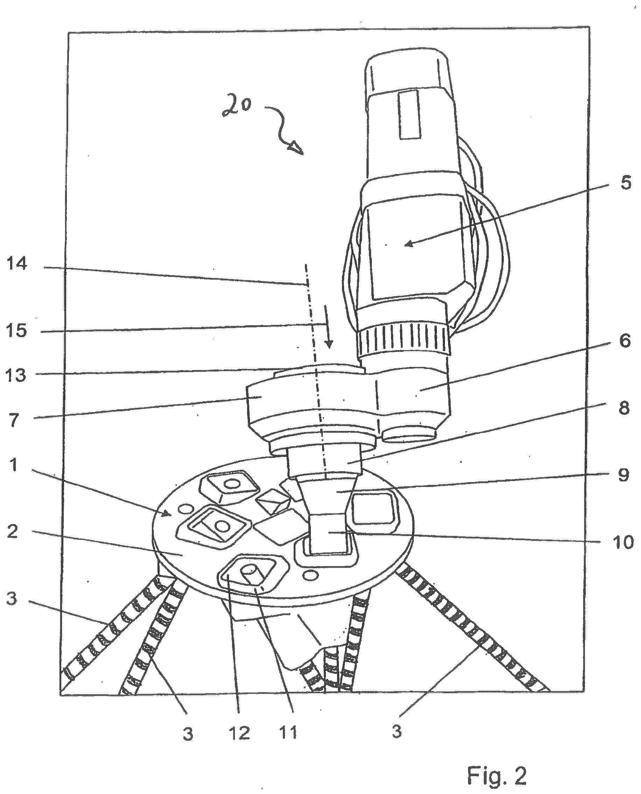

Gemäß den Figuren 1 bis 3 besteht der Alpinanker 1 aus einer aus einem metallischen Werkstoff, bevorzugt einem Gusswerkstoff, bestehenden Grundplatte 2, die eine Anzahl von schräg die Grundplatte 2 durchsetzenden Gewindebohrungen 16 aufweist. Die Gewindebohrungen 16 sind im Bereich von an die Unterseite der Grundplatte 2 im Gußmaterial der Grundplatte eingeformten Gewindehülsen 4 ausgebildet. Die Gewindehülsen 4 sind also als an die Unterseite der Grundplatte 2 angeformte Gußansätze oder Fortsätze ausgebildet. Durch die Gewindebohrungen 16 der Grundplatte 2 sollen eine Anzahl von Gewindestäben 3 hindurchgeschraubt werden, wobei sich das Außengewinde des jeweiligen Gewindestabes 3 im Gewindeeingriff der Gewindebohrung 16 im Bereich der Gewindehülse 4 befindet.

Zum Eintreiben der Gewindestäbe 3 wird eine Antriebsmaschine 5 verwendet, die einen Antriebsmotor aufweist, dessen Antriebswelle auf ein Untersetzungsgetriebe 6 arbeitet, welches als Winkelgetriebe ausgebildet ist und in einem Montagekopf 7 ein dort angeordnetes Drehfutter 8 antreibt, das aus einer drehend angetriebenen Antriebshülse 9 besteht, deren Profil dem (beidseitig abgeflachten Rund-) Profil des Gewindestabes 3 entspricht. Der Gewindestab 3 trägt an seinem Außenumfang ein Schraubgewinde.

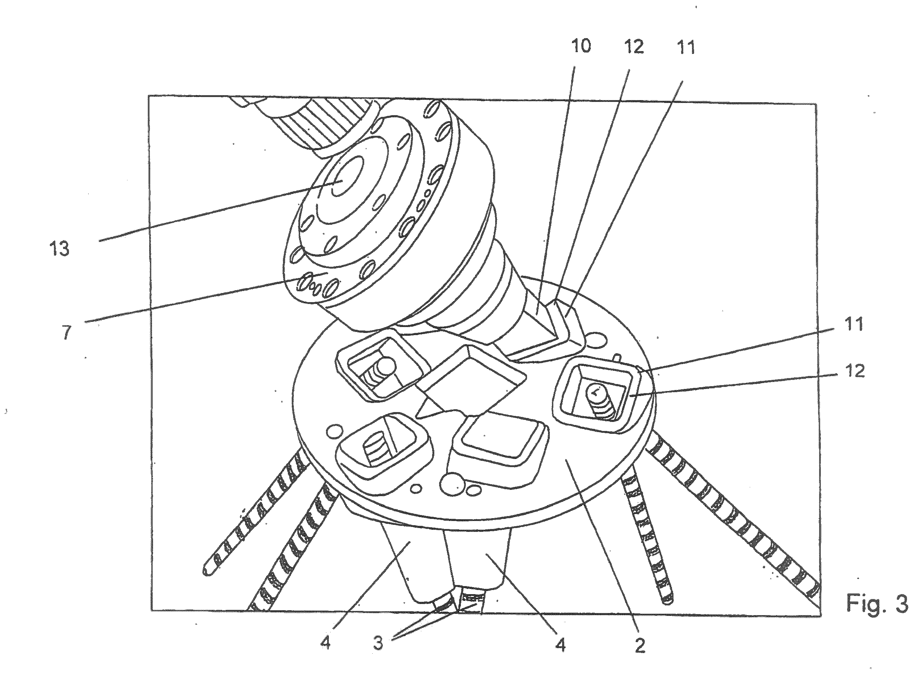

Wie aus Figur 3 erkennbar, ist an der Oberseite des Montagekopfes 7 eine Einführöffnung 13 angeordnet, die zur Aufnahme des vorderen Endes eines Gewindestabes 3 geeignet ist. Dieser wird in Pfeilrichtung 15 in Richtung der Längsachse 14 mit seiner Spitze nach unten in die Einführöffnung 13 eingesetzt und soweit von Hand in den Montagekopf 7 eingeführt, bis das Außengewinde des Gewindestabes 3 in drehfesten Krafteingriff mit der Antriebshülse 9 im Drehfutter 8 kommt.

Der Gewindestab 3 ragt dann nach vorne aus der Antriebshülse 9 heraus und durchgreift ein Formstück 10, welches gehäusefest mit dem Gehäuse der Antriebsmaschine 5 verbunden ist.

In dieser Montagelage wird nun die Antriebsmaschine 5 auf die Oberseite der Grundplatte 2 aufgesetzt, wie dies in den Figuren 1 bis 3 gezeigt ist, so dass das maschinenseitige Formstück 10 in formschlüssigem Eingriff mit jeweils einer Formausnehmung 12 an der Oberseite der Grundplatte 2 kommt. Damit ist die Steckkupplung zwischen der Montagemaschine 20 und der Grundplatte 2, 2a hergestellt.

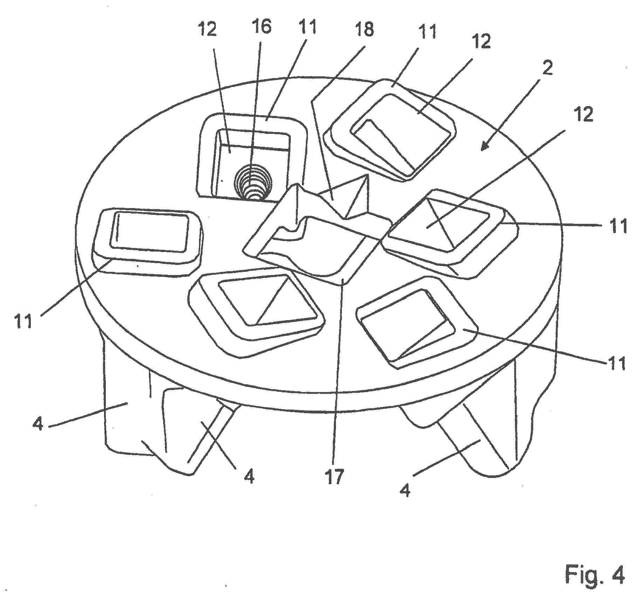

Dies ist in den Figuren 4 bis 7 näher dargestellt.

Jede Gewindebohrung 16 in der Grundplatte 2 ist in einer ersten Ausführungsform der Erfindung vertieft angeordnet und endet an der Oberseite in einer Formausnehmung 12, die ihrerseits von einer etwa vierkantförmigen, an drei Seiten umlaufenden Formaufnahme 11 umgeben ist. Bei dieser vertieften Anordnung der Formausnehmung 12 ergibt sich der Vorteil einer geringen Bauhöhe der Grundplatte 2, weil der den einen Teil der Steckkupplung bildende, grundplattenseitige Teil der vom Ausnehmung unterhalb der Oberfläche der Grundplatte 2 eingeformt ist

Der obere Teil der Formaufnahme 11 ist erhöht über der Oberseite der Grundplatte 2 an diese angeformt und bildet einen zwei- oder dreiseitigen Kragen. Es kann aber auch ein durch vier Seiten begrenzter Kragen vorgesehen sein.

In einer anderen Ausgestaltung kann Formaufnahme 11 auch vertieft in der Grundplatte 2 in Form von zwei oder drei oder 4 miteinander verbundenen Nuten ausgebildet sein.

Die Profilform der Formaufnahme 11 muss mit der Profilform des dort in drehfesten Eingriff bringbaren Formstücks 10 der Montagemaschine im Wesentlichen übereinstimmen. Es soll also ein Formschluss zwischen dem Innenumfang der Formaufnahme 11 und dem Außenumfang des maschinenseitigen Formstücks 10 erreicht werden.

Die Formgebung des maschinenseitig angeordneten Formstücks 10 ist so geschaffen, dass das Formstück 10 formschlüssig in die grundplattenseitige Formaufnahme 11 hindurch greift und sich an den Wandungen der Formausnehmung 12 der Grundplatte 2 formschlüssig anlegt.

Damit ist eine drehfeste Kupplung zwischen dem Gehäuse der Antriebsmaschine 5 und der jeweiligen Grundplatte 2 geschaffen.

Es genügt jetzt, dass der aus der Vorderseite der Antriebshülse 9 hervorragende Teil des Gewindestabes auf die Gewindebohrung 16 in der Grundplatte 2 aufgesetzt wird und danach die Antriebsmaschine 5 eingeschaltet wird. Somit wird der Gewindestab 3 von hinten nach vorne in Pfeilrichtung 15 drehend durch die Gewindebohrung 16 in der Grundplatte 2 hindurch geschraubt und treibt sich mit seiner Spitze selbsttätig während der Drehung in das Erdreich oder Gestein hinein. Der Vorschub wird durch die Gewindesteigung der Gewindehülse in der Grundplatte über das Außengewinde am Gewindestab 3 gewährleistet.

Eventuell entgegenwirkende Drehmomente werden von der formschlüssigen (Steck-)Kupplung zwischen der Grundplatte 2 und der Antriebsmaschine 5 aufgenommen, weil sich das maschinenseitige Formstück 10 der Antriebsmaschine 5 in formschlüssigem Eingriff mit der jeweiligen Formaufnahme 11 der Grundplatte 2 befindet.

In den Figuren 4 bis 5 ist eine kleinere Ausführung einer Grundplatte 2 dargestellt, bei der lediglich sechs unterschiedliche Gewindebohrungen 16 mit dazugehörenden Formaufnahmen 11 und Formausnehmungen 12 dargestellt sind.

Jede Gewindebohrung 16 ist nach unten im Bereich einer Gewindehülse 4 verlängert, die werkstoffeinstückig an die Unterseite der Grundplatte 2 angeformt ist, wobei sich auch diese Gewindehülsen 4 in das Erdreich oder Gestein mit eingraben und eine drehfest die Verbindung zwischen der Grundplatte und dem umgebenden Erdreich ermöglichen.

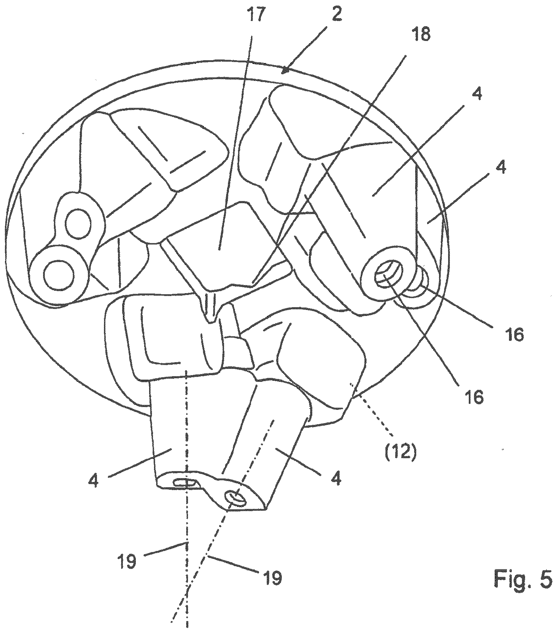

Wichtig ist ferner, dass die Neigung von paarweise nebeneinander angeordneten Gewindehülsen 4 mit darin eingearbeiteten Gewindebohrungen 16 so gewählt ist, dass die Einschraubrichtungen 19 benachbarter Gewindestäbe 3 sich kreuzen, wie es in Figur 5 dargestellt ist.

Derartig, sich kreuzende Gewindestäbe sind auch in den Zeichnungen nach Figuren 1 bis 3 dargestellt.

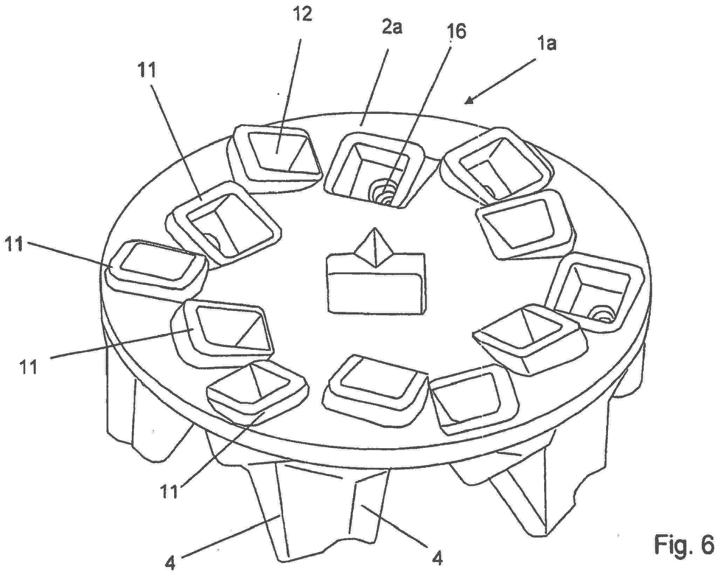

Sowohl die Grundplatte 2 nach den Figuren 4 bis 5 als auch die größer ausgebildete Grundplatte 2a nach den Figuren 6 bis 7 trägt jeweils eine als Vierkant oder Mehrkant ausgebildete Mittenausnehmung 17, in der eine seitliche Führungskerbe 18 angeformt ist.

In dieser Mittenausnehmung 17 können dann von der Grundplatte 2 nach oben weg ragende Gegenstände, z. B. Masten, Aufnahmen oder andere Montageteile angeordnet werden, die sich in den Mittenausnehmung 17 zentrieren.

Ebenso ist es möglich, die Grundplatte 2, 2a noch mit anderen, nicht näher dargestellten Gewindebohrungen zu versehen, mit denen es möglich ist, auf der Oberseite der Grundplatte 2, 2a beliebige Anschlussteile oder Befestigungsteile zu befestigen.

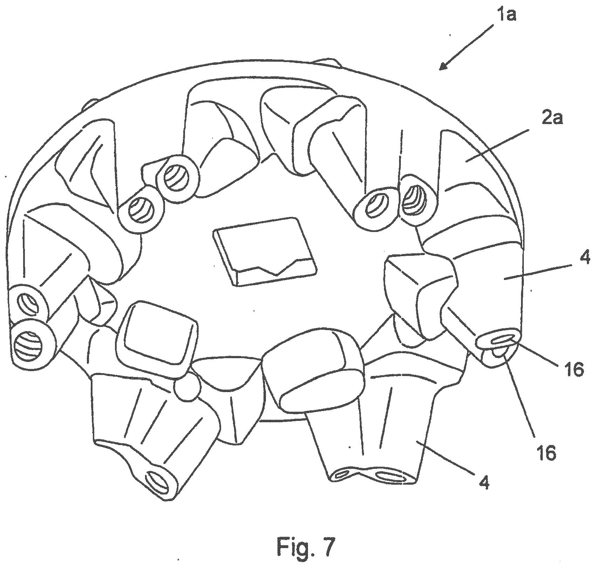

Die größere Grundplatte 2a nach den Figuren 6 und 7 trägt insgesamt 12 Gewindebohrungen, die jeweils im Winkel zueinander angeordnet sind, wobei paarweise angeordnete Gewindebohrungen 16 jeweils in paarweise zusammenlaufenden Gewindehülsen 4 zusammengefasst sind, die an der Unterseite der Grundplatte 2, 2a angeformt sind und mit dieser ein werkstoffeinstückiges Teil bilden.

Selbstverständlich ist es nicht lösungsnotwendig, dass die in den Figuren 4 bis 7 gezeigten, in die Gewindebohrungen 16 umrandenden Formaufnahmen 11 erhaben über die Oberfläche der Grundplatte 2, 2a ausgebildet sind.

Sie können auch als versenkte Mehrkant- oder Vierkantausnehmungen in der Oberfläche der Grundplatte 2, 2a versenkt angeordnet sein.

Die weiteren Zeichnungen zeigen, dass unabhängig von der Profilform der Steckkupplung nur dafür gesorgt werden muss, dass eine drehfest Steckverbindung zwischen der Montagemaschine 20 und den Formaufnahmen auf der Grundplatte 2 gewährleistet ist.

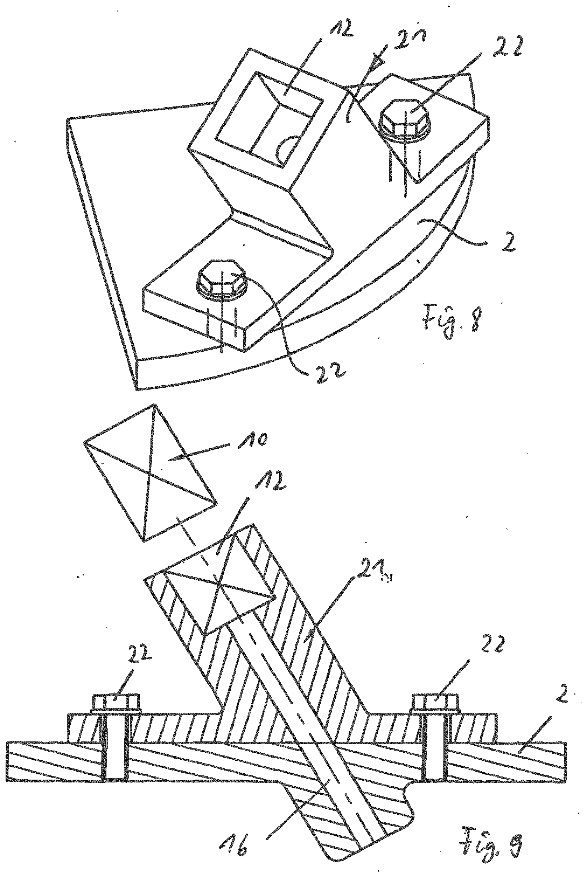

So zeigen die Figuren 8 und 9 eine andere Ausführungsform einer Formaufnahme 21, die als separates Teil mithilfe von Schrauben 22 auf der Oberfläche der Grundplatte 2 fest gelegt ist. Am oberen Ende der Formaufnahme 21 ist die Formausnehmung 12 angeordnet, in welche das maschinenseitige Formstück 10 in der Art einer Steckkupplung eingreift und drehfest gehalten ist.

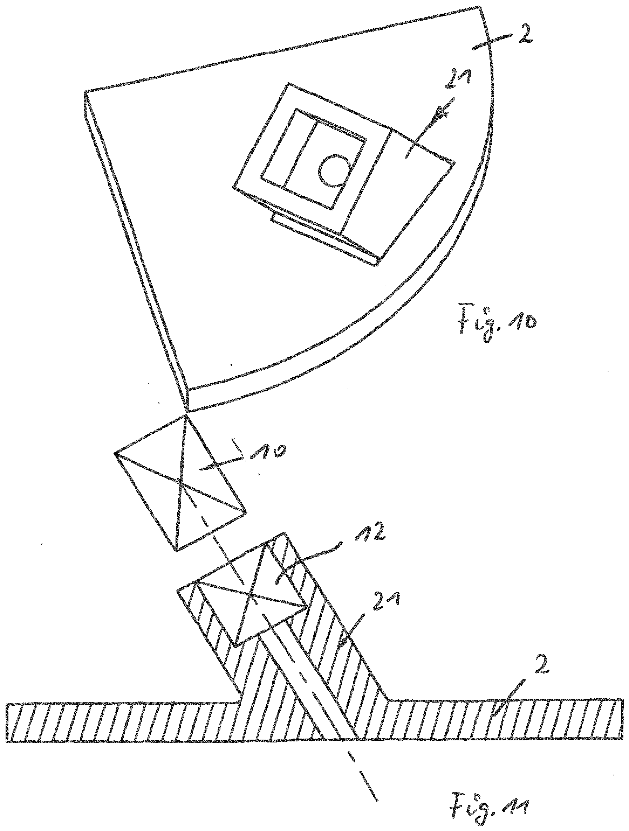

Die Figuren 10 und 11 zeigen, dass die in Figur 8 und 9 als separates Teil dargestellte Formaufnahme 21 auch unmittelbar werkstoffeinstückig mit der Grundplatte 2 verbunden sein kann.

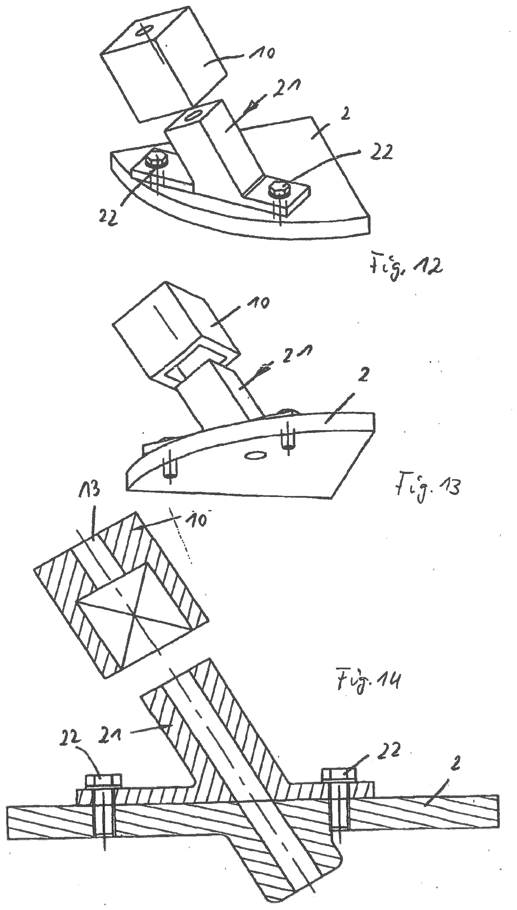

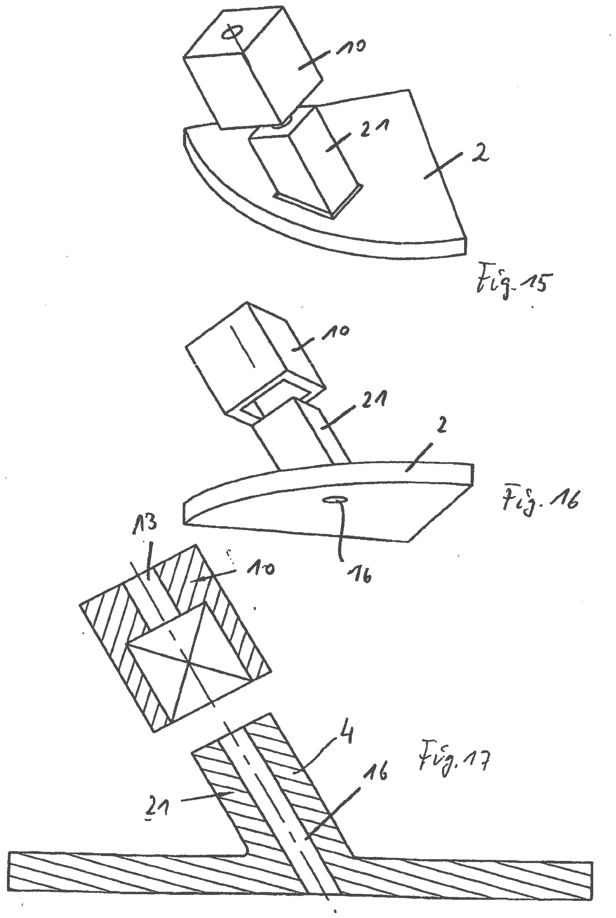

Im Unterschied zu den Ausführungsbeispiel nach Figuren 8-11 zeigen die Figuren 12-17, dass eine Steckkupplung auch dadurch gebildet werden kann, dass das maschinenendseitige Formstück 10 die grundplattenseitige Formaufnahme 21 übergreift und mit dieser in der Art einer Steckkupplung drehfest verbindbar ist.

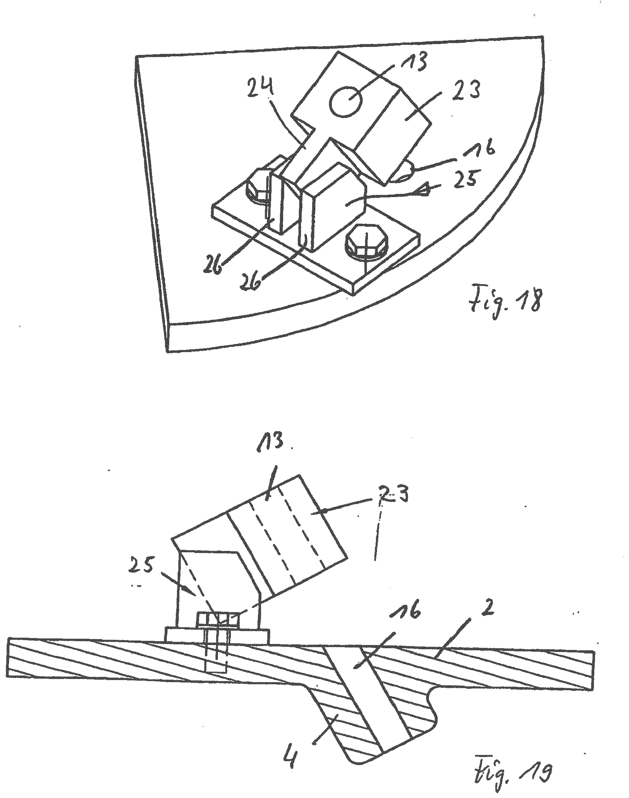

In den Figuren 18-21 ist eine weitere Ausführungsform einer Steckkupplung dargestellt. Hierbei ist erkennbar, dass auf der Maschinenseite ein Formstück 23 befestigt ist, welches mindestens einen seitlichen Ansatz 24 aufweist, der in eine zugeordnete grundplattenseitige Formaufnahme 25 einsteckbar ist. Die grundplattenseitige Formaufnahme 25 ist durch 2 parallele und im Abstand zueinander angeordnete Ansätze 26 ausgebildet, die zwischen sich einen Zwischenraum bilden, in denen der maschinenseitigen Ansatz 24 eingreift.

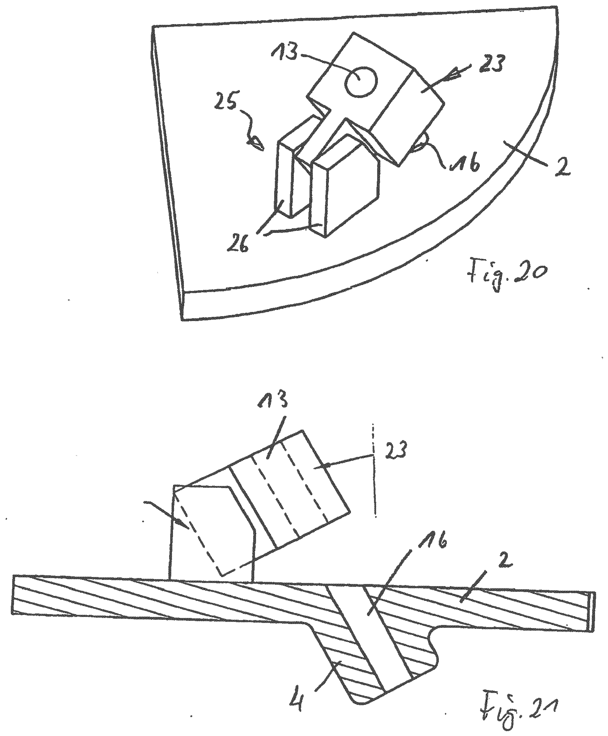

In Figur 20 und 21 ist gezeigt, dass die grundplattenseitige Formaufnahme 25 auch unmittelbar werkstoffeinstückig mit der Grundplatte selbst ausgebildet sein kann.

Bei allen Ausführungsbeispielen ist im übrigen erkennbar, dass die in dem maschinenseitig angeordneten Formstück 10, 23,27 angeordnete Einführöffnung 13 mit der grundplattenseitige in Gewindebohrung 16 fluchten muss, weil durch beide Bohrungen 13,16 der Gewindestab 3 hindurch greift.

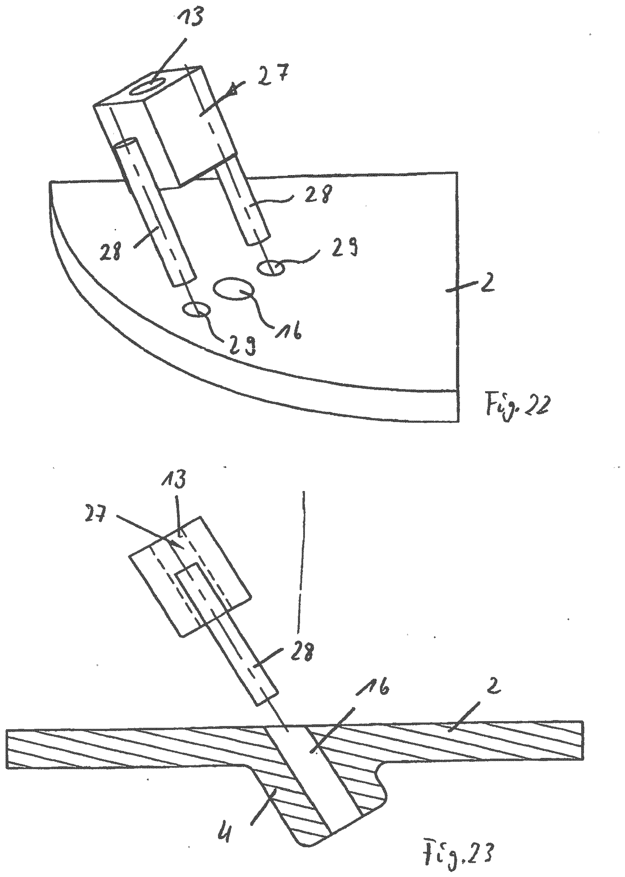

Die Figuren 22 und 23 zeigen als weitere Ausführungsform, dass an dem maschinenseitigen Formstück 27 mindestens 2 Zapfen 28 angeordnet sind, die zur Herstellung der drehfesten Steckverbindung in zugeordnete grundplattenseitige Bohrungen 29 eingreifen. Es ist natürlich auch die kinematische Umkehrung möglich, dass die Zapfen 28 an der Grundplatte 2 angeformt sind und in zugeordnete Aufnahmebohrungen 29 im Bereich des maschinenseitigen Formstücks 27 eingreifen.

## Patentansprüche

1. Alpinankersystem bestehend aus Alpinanker (1, 1a) zur Verankerung von Gewindestäben (3) im Erdboden oder Gestein mit einer aus Metall bestehenden Grundplatte (2, 2a), die eine Anzahl von am Umfang verteilt angeordneter Gewindebohrungen (16) aufweist, in welche die Gewindestäbe (3) mit einer Montagemaschine (5, 6, 7, 8, 9) einschraubbar sind, weiter bestehend aus einer Montagemaschine (5, 6, 7, 8,9), wobei zwischen dem stationären Teil der Montagemaschine (20) und der Grundplatte (2, 2a) mindestens eine Steckkupplung (10, 23, 27; 11, 21, 25) angeordnet ist.

2. Alpinankersystem nach Anspruch 1, **dadurch gekennzeichnet, dass** in der Grundplatte (2, 2a) eine Anzahl von Gewindebohrungen (16) angeordnet sind, in denen die Gewindestäbe (3) einschraubbar sind und dass auf oder in der Grundplatte (2, 2a) in der Nähe der Gewindebohrungen (16) Formaufnahmen (21, 25, 27) für den drehfesten Eingriff des feststehenden Teils der Montagemaschine (20) angeordnet sind, in denen die Montagemaschine (20) beim Eindrehen der Gewindestäbe (3) drehfest eingesteckt ist

3. Alpinankersystem nach Anspruch 1 oder2, **dadurch gekennzeichnet, dass** in oder auf der Oberseite der Grundplatte (2, 2a) die Formaufnahmen (11, 21, 25) zum drehfesten Angriff für die Montagemaschine (20) angeordnet sind, und dass die Formaufnahmen (11, 21, 25) die Gewindebohrungen (16) für den Schraubeingriff der Gewindestäbe (3) mindestens teilweise umgeben.

4. Alpinankersystem nach einem der Ansprüche 1 bis 3, **dadurch gekennzeichnet, dass** die Formaufnahme (11, 21, 25) die Oberseite der Grundplatte (2, 2a) überragt und im Umgebungsbereich um die Gewindebohrung (16) eine zum Eingriff des maschinenseitigen Formstücks bestimmte Formausnehmung (12) bildet.

5. Alpinankersystem nach einem der Ansprüche 1 bis **3, dadurch gekennzeichnet, dass** die Formaufnahme (11, 21, 25) in die Oberfläche der Grundplatte (2, 2a) versenkt ist.

6. Alpinankersystem nach einem der Ansprüche 1 bis **5, dadurch gekennzeichnet, dass** die Gewindebohrung (16) in einer an der Unterseite der Grundplatte (2, 2a) angeformten Gewindehülse (4) angeordnet ist.

7. Montagemaschine zur Verankerung von Alpinankern (1) im Erdboden oder Gestein mit einer Antriebsmaschine (5), welche über ein Untersetzungsgetriebe (6) einen Montagekopf (7) mit einem dort drehend angetriebenen Drehfutter (8) antreibt, welches formschlüssig mit einem Gewindestab (3) verbindbar ist, **dadurch gekennzeichnet, dass** der Gewindestab (3) über eine am Montagekopf (6) angeordnete Einführöffnung (13) in eine im Montagekopf (7) drehend angetriebene Antriebshülse (9) einführbar ist, die drehend angetrieben ist, und den Gewindestab (3) drehend antreibt, und dass an der Montagemaschine (20) mindestens ein Formstück (10, 23, 27) gehäusefest angeordnet ist, das formschlüssig in eine Formaufnahme (11, 21, 25) an einer Grundplatte (2, 2a) des Alpinankers (1) einsteckbar ist, und dass die Montagemaschine (20) dort freistehend gehalten ist.

8. Verfahren zur Montage eines Alpinankers (1) mit einer den Drehantrieb des Gewindestabes ausführenden Montagemaschine (20), **dadurch gekennzeichnet, dass** der Gewindestab (3) durch Drehantrieb mit der drehfest mit der Grundplatte (2,2a) gekuppelten Montagemaschine (20) und durch die Gewindehülse (4) hindurch in der Grundplatte (2, 2a) in das Erdreich oder Gestein getrieben wird.

9. Verfahren nach Anspruch 8, **dadurch gekennzeichnet, dass** in einem ersten Verfahrensschritt der zu montierende Gewindestab (3) in eine Einführöffnung (13) an der Rückseite des Montagekopfes (7) eingesetzt und bis in den Bereich einer im Montagekopf (7) angeordneten Antriebshülse (9) geführt wird,
dass in einem zweiten Verfahrensschritt der Gewindestab (3) in Eingriff mit der Antriebshülse (9) gebracht wird, dass in einem dritten Verfahrensschritt das an der Vorderseite der Montagemaschine angeordnete Formstück (10) in formschlüssigen Eingriff mit der Formaufnahme (11) auf der Grundplatte (2, 2a) gebracht wird und dass in einem vierten Verfahrensschritt der Antriebsmotor der Antriebsmaschine (5) in Gang gesetzt wird und der Gewindestab (3) mit der drehfest mit der Grundplatte (2,2a) gekuppelten Montagemaschine (20) durch die Gewindehülse (4) in der Grundplatte (2, 2a) in das Erdreich oder Gestein getrieben wird.

## Claims

1. Alpine anchor system consisting of alpine anchors (1, 1a) for anchoring threaded rods (3) in the ground or rock with a base plate (2, 2a) which is made of metal and exhibits a number of threaded bores (16) which are arranged distributed around the circumference and into which the threaded rods (3) can be screwed with a mounting machine (5, 6, 7, 8, 9), and consisting further of a mounting machine (5, 6, 7, 8, 9), wherein at least one insertion coupling (10, 23, 27; 11, 21, 25) is arranged between the stationary part of the mounting machine (20) and the base plate (2, 2a).

2. Alpine anchor system according to claim 1, **characterised in that** arranged in the base plate (2, 2a) there are a number of threaded bores (16) into which the threaded rods (3) can be screwed, and **in that** arranged on or in the base plate (2, 2a) in the vicinity of the threaded bores (16) there are shaped mounting receptacles (21, 25, 27) for rotationally fixed engagement of the stationary part of the mounting machine (20), into which the mounting machine (20) is inserted so that it cannot turn when the threaded rods (3) are screwed in.

3. Alpine anchor system according to claim 1 or 2, **characterised in that** the shaped mounting receptacles (11, 21, 25) for rotationally fixed engagement for the mounting machine (20) are arranged in or on the upper side of the base plate (2, 2a), and **in that** the shaped mounting receptacles (11, 21, 25) at least partly surround the threaded bores (16) for the screwed engagement of the threaded rods (3).

4. Alpine anchor system according to one of claims 1 to 3, **characterised in that** the shaped mounting receptacle (11, 21, 25) projects beyond the upper side of the base plate (2, 2a) and in the surrounding region around the threaded bore (16) forms a shaped recess (12) intended for engagement of the shaped part on the machine.

5. Alpine anchor system according to one of claims 1 to 3, **characterised in that** the shaped mounting receptacle (11, 21, 25) is recessed into the surface of the base plate (2, 2a).

6. Alpine anchor system according to one of claims 1 to 5, **characterised in that** the threaded bore (16) is arranged in a threaded sleeve (4) formed on the underside of the base plate (2, 2a).

7. Mounting machine for anchoring alpine anchors (1) in the ground or rock with a driving machine (5) which through a reduction gearing unit (6) drives a mounting head (7) with a rotary chuck (8) which is driven in rotation thereon and can be connected in form-locking manner with a threaded rod (3), **characterised in that** the threaded rod (3) can be introduced through an introduction opening (13) arranged in the mounting head (7) into a driving sleeve (9) which is driven in rotation in the mounting head (7), which is driven in rotation, and drives the threaded rod (3) in rotation, and
**in that** arranged on the mounting machine (20) fixed to the housing there is at least one shaped part (10, 23, 27) which can be inserted in form-locking manner into a shaped mounting receptacle (11, 21, 25) in a base plate (2, 2a) of the alpine anchor (1), and **in that** the mounting machine (20) is held there so that it is self-supporting.

8. Method for mounting an alpine anchor (1) with a mounting machine (20) providing the rotary drive for the threaded rod, **characterised in that** the threaded rod (3) is driven through the threaded sleeve (4) in the base plate (2, 2a) into the ground or rock by rotary driving with the mounting machine (20) which is coupled with the base plate (2, 2a) so that it cannot turn.

9. Method according to claim 8, **characterised in that** in a first method step the threaded rod (3) to be mounted is inserted into an introduction opening (13) on the rear side of the mounting head (7) and guided into the region of a driving sleeve (9) arranged in the mounting head (7), **in that** in a second method step the threaded rod (3) is brought into engagement with the driving sleeve (9), **in that** in a third method step the shaped part (10) arranged on the front side of the mounting machine is brought into form-locking engagement with the shaped mounting receptacle (11) on the base plate (2, 2a), and **in that** in a fourth method step the driving motor of the driving machine (5) is set in motion and the threaded rod (3) is driven through the threaded sleeve (4) in the base plate (2, 2a) into the ground or rock with the mounting machine (20) coupled to the base plate (2, 2a) so that it cannot turn.

## Revendications

1. Système d'ancrage alpin composé d'un ancrage alpin (1, 1a) pour ancrer des barres filetées (3) dans le sol ou dans la roche, avec une plaque de base (2, 2a) en métal qui présente un certain nombre de perçages filetés (16) qui sont répartis sur sa circonférence et dans lesquels les barres filetées (3) sont aptes à être vissées à l'aide d'une machine de montage (5, 6, 7, 8, 9), et également composé d'une machine de montage (5, 6, 7, 8, 9), étant précisé qu'entre la partie stationnaire de la machine de montage (20) et la plaque de base (2, 2a) est disposé au moins un accouplement à emboîtement (10, 23, 27 ; 11, 21, 25).

2. Système d'ancrage alpin selon la revendication 1, **caractérisé en ce qu'**il est prévu dans la plaque de base (2, 2a) un certain nombre de perçages filetés (16) dans lesquels les barres filetées (3) sont aptes à être vissées, et **en ce qu'**il est prévu sur ou dans la plaque de base (2, 2a), près des perçages filetés (16), des logements profilés (21, 25, 27) pour la pénétration fixe en rotation de la partie fixe de la machine de montage (20), dans lesquels ladite machine de montage (20) est introduite, fixe en rotation, lors du vissage des barres filetées (3).

3. Système d'ancrage alpin selon la revendication 1 ou 2, **caractérisé en ce que** dans ou sur le côté supérieur de la plaque de base (2, 2a) sont disposés les logements profilés (11, 21, 25) pour le positionnement, fixe en rotation, de la machine de montage (20), et **en ce que** les logements profilés (11, 21, 25) entourent au moins en partie les perçages filetés (16) pour l'introduction par vissage des barres filetées (3).

4. Système d'ancrage alpin selon l'une des revendications 1 à 3, **caractérisé en ce que** le logement profilé (11, 21, 25) dépasse du côté supérieur de la plaque de base (2, 2a) et forme, dans la zone qui entoure le perçage fileté (16), un creux profilé (12) destiné à la mise en prise de la pièce profilée côté machine.

5. Système d'ancrage alpin selon l'une des revendications 1 à 3, **caractérisé en ce que** le logement profilé (11, 21, 25) est encastré dans la surface de la plaque de base (2, 2a).

6. Système d'ancrage alpin selon l'une des revendications 1 à 5, **caractérisé en ce que** le perçage fileté (16) est disposé dans un manchon fileté (4) rapporté sur le côté inférieur de la plaque de base (2, 2a).

7. Machine de montage pour ancrer des ancrages alpins (1) dans le sol ou dans la roche, avec un moteur d'entraînement (5) qui entraîne par l'intermédiaire d'un démultiplicateur (6) une tête de montage (7) avec un mandrin rotatif (8), entraîné en rotation à cet endroit, qui est apte à être relié par complémentarité de forme à une barre filetée (3), **caractérisée en ce que** la barre filetée (3) est apte à être introduite, par une ouverture d'introduction (13) disposée sur la tête de montage (7), dans un manchon d'entraînement (9) qui est entraîné en rotation dans ladite tête de montage (7) et qui entraîne en rotation ladite barre filetée (3), et **en ce qu'**il est prévu, solidaire de la machine de montage (20), au moins une pièce profilée (10, 23, 27) qui est apte à être emboîtée par complémentarité de forme dans un logement profilé (11, 21, 25), sur une plaque de base (2, 2a) de l'ancrage alpins (1), et **en ce que** la machine de montage (20) est tenue à cet endroit de manière indépendante.

8. Procédé pour le montage d'un ancrage alpin (1) à l'aide d'une machine de montage (20) qui produit l'entraînement en rotation de la barre filetée, **caractérisé en ce que** la barre filetée (3), dans la plaque de base (2, 2a), est enfoncée dans la terre ou la roche grâce à l'entraînement en rotation à l'aide de la machine de montage (20) accouplée, fixe en rotation, à ladite plaque de base (2, 2a) et à travers le manchon fileté (4).

9. Procédé selon la revendication 8, **caractérisé en ce que** lors d'une première étape de procédé, la barre filetée (3) à monter est placée dans une ouverture d'introduction (13), sur l'arrière de la tête de montage (7), et est amenée jusque dans la zone d'un manchon d'entraînement (9) disposé dans la tête de montage (7),
**en ce que** lors d'une deuxième étape, la barre filetée (3) est mise en prise avec le manchon d'entraînement (9), **en ce que** lors d'une troisième étape de procédé, la pièce profilée (10) disposée sur l'avant de la machine de montage est mise en prise, par complémentarité de forme, avec le logement profilé (11) prévu sur la plaque de base (2, 2a), et **en ce que** lors d'une quatrième étape de procédé, le moteur d'entraînement de la machine d'entraînement (5) est mis en marche et la barre filetée (3), dans la plaque de base (2, 2a), est enfoncée dans la terre ou dans la roche à l'aide de la machine de montage (20) accouplée, fixe en rotation, à travers le manchon fileté (4).
